Europäisches Patentamt

European Patent Office

Office européen des brevets

(11) Publication number: **0 256 665**
**A2**

# (12) EUROPEAN PATENT APPLICATION

(21) Application number: **87306196.4**

(22) Date of filing: **14.07.87**

(51) Int. Cl.⁴: **B60T 8/78 , B60T 8/50**

(30) Priority: **02.08.86 GB 8618938**

(43) Date of publication of application:
**24.02.88 Bulletin 88/08**

(84) Designated Contracting States:
**DE ES FR GB IT**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Antrobus, Philip Michael**
**40 Brookhurst Court Beverley Road**
**Leamington Spa Warwicks CV32 6PB(GB)**
Inventor: **Bollons, Bernard**
**3 Quinneys Road**
**Stratford upon Avon Warwickshire(GB)**

(74) Representative: **Cundy, Anthony Brian et al**
**Anthony Cundy & Company 384 Station Road Dorridge**
**Solihull West Midlands B93 8ES(GB)**

(54) Vehicle antilock braking system.

(57) The invention provides a control system for an antilock braking system including a servo mechanism (50;50') which may be controlled by two solenoid valves (70 and 78). The solenoid valve (70) when energised causes reduction in the braking effort and when de-energised causes reapplication of the braking effort and solenoid valve (78) permits reduction or reapplication of the braking effort at a slow rate when de-energised and at a fast rate when energised. The control means includes sensing means (II;II') associated with a wheel for producing a signal corresponding to the speed of the wheel; means (I03) for converting the wheel speed signal into a signal corresponding to wheel acceleration or deceleration; means (I07,II4,72) for energising solenoid valves (70) when the wheel deceleration reaches a first predetermined magnitude; means (I08,II5,II4,72) for de-energising solenoid valves (70) when wheel deceleration falls to a second predetermined magnitude; means (I09,II6,II7,80) for energising solenoid valve (78) when the wheel acceleration reaches a first predetermined magnitude; means (II6,II7,80) for de-energising solenoid valve (78) when braking effort has risen significantly; and means (I25,II6,II7,80) for energising solenoid valve (78) after a predetermined time period has elapsed from when the first solenoid valve (70) was de-energised, if the second solenoid valve (78) has not otherwise been energised.

# VEHICLE ANTILOCK BRAKING SYSTEM

This invention relates to vehicle antilock braking systems.

In the vehicle antilock braking system disclosed in British Patent Application No. 86 091 63, servo means is provided for varying the effort applied to the brake on a wheel, in order to prevent the wheel locking during braking. The servo means is controlled by a first solenoid valve in response to which pressure in the braking system may be either reduced or reapplied. A second solenoid valve varies the rate of reapplication, between a fast and slow rate.

The solenoid valves are controlled in response to wheel acceleration or deceleration to provide an antilock cycle which will reduce the braking effort as wheel locking conditions approach and will reapply the braking effort as the wheel accelerates. It has been proposed in British Patent Specification No. 8609163, that the solenoid valves should be controlled so that the braking effort will be reapplied at a slow rate when the wheel starts to accelerate and at a fast rate when wheel acceleration reaches a predetermined magnitude, for example 2g. However on surfaces of low frictional coefficient it is possible that wheel acceleration may not reach the predetermined magnitude at which the solenoid valve will be switched to provide fast reapplication of braking effort. As a consequence reapplication of braking effort will continue at a slow rate and the pressure in the brake system will remain at a low level. There is no problem provided that the frictional coefficient of the surface remains low. However, if the coefficent of the surface changes from low to high during a braking operation, there will be a delay before the pressure in the braking system can be raised sufficiently to provide optimum brake performance on the high frictional coefficient surface.

The present invention provides a control system by means of which the first and second solenoid valves may be controlled during a braking operation to take account of changes from a surface of low frictional coefficient to a surface of high frictional coefficient.

According to one aspect of the present invention a control system for an antilock braking system including servo means for varying the effort applied to a brake on a wheel, a first solenoid valve by means of which said servo means may be controlled to either reduce or reapply the braking effort and a second solenoid valve by means of which said servo means may be controlled to reapply the braking effort at either a fast or slow rate, characterised in that sensing means is associated with the wheel for producing a signal corresponding to the speed of the wheel; means is provided for converting the wheel speed signal into a signal corresponding to wheel acceleration or deceleration; means is provided for switching said first solenoid valve, so that the servo means will act to reduce the braking effort applied to the wheel, when the wheel deceleration reaches a first predetermined magnitude; means is provided for switching said first solenoid valve, so that the servo means will act to reapply the braking effort, when the wheel deceleration falls to a second predetermined magnitude; means is provided for switching said second solenoid valve, so that the servo means will go from a slow rate of reapply to a fast rate of reapply, when the wheel acceleration reaches a first predetermined magnitude; means is provided for switching said second solenoid valve, so that the servo means will go from a fast rate of reapply to a slow rate of reapply, when braking effort has risen significantly, and means is provided for switching said second solenoid valve, so that the servo means will go from a slow rate of reapply to a fast rate of reapply after a predetermined time period has elapsed from when the first solenoid valve was switched to reapply braking effort, if the second solenoid valve has not otherwise been so switched.

The actual values at which the solenoid valves are switched will depend of the characteristics of the antilock braking system and upon the vehicle, but generally, the first predetermined magnitude of deceleration will be between lg and 6g, typically l.5g; the second predetermined magnitude of deceleration is at a point just before the wheel starts to accelerate, typically 0.4g; the first predetermined magnitude of acceleration will be between lg and 8g, typically 4g; and the predetermined time period will be, between 300 and 900 milliseconds, preferably of the order of 600 milliseconds.

Preferably, the second solenoid valve will also be arranged to control the servo means so that braking effort may be reduced at either a fast or slow rate. Further means will be provided in the control system by which the second solenoid valve may be switched, so that the servo means goes from a slow rate of reduction of braking effort to a fast rate of reduction of braking effort, when the wheel deceleration reaches a third predetermined magnitude, said third predetermined magnitude being in excess of the first predetermined magnitude of deceleration. Moreover, means may be provided in the control system for converting the wheel speed signal into a rate of change of deceleration or acceleration signal, this signal may be used for switching said second solenoid valve, to cause the servo means to go from a fast rate of reduction of braking effort to a slow rate of reduction of braking effort, when the rate of change of deceleration has a predetermined value which is approximately zero. The third predetermined magnitude of deceleration must be greater than the first predetermined magnitude and will generally be between lg and 6g, typically 2.5g.

The means for switching the second solenoid valve, so that the servo means will go from a fast rate of reapply to a slow rate of reapply may be triggered; in response to the wheel acceleration falling to a second predetermined value, for example from lg to 3g, typically lg; or a predetermined time period after a preceding event in the antilock cycle, for example from l5 to 60 milliseconds, typically 20 milliseconds, after the servo means is switched to go from slow reapply to fast reapply, or from 75 to l40 milliseconds, typically 80 milliseconds, from when the rate of change of deceleration of the vehicle wheel is approximately zero.

At the end of an antilock cycle, the slow rate of reapply will continue until the full braking effort is re-established or the wheel deceleration reaches the first predetermined magnitude, when a further antilock braking cycle will commence.

During a braking operation, the velocity of the wheel will be below that of the vehicle, due to slippage. Depending on the road surface, if the slip increases above a given percentage of the vehicle speed, locking of the wheel will be liable to occur. It is consequently undesirable to commence reapplication of the brakes if the slip is above a predetermined value, even if deceleration of the vehicle wheel falls to the second predetermined magnitude.

Where a wheel of the vehicle is unbraked, the speed of this wheel may be taken as the speed of the vehicle. However, normally all the wheels of the vehicle will be braked, so that this will not be possible. However means may be provided in the control system for producing a simulated vehicle speed from the speed of the wheel, when an antilock cycle is commenced. This vehicle speed simulation means may, for example, assume a decay in the vehicle speed of lg. Means may then be provided to give a measure of the slip between the actual wheel speed and the simulated vehicle speed and switch the first solenoid valve, so that the servo means will act to reapply the brake effort, only when the wheel deceleration falls to said second predetermined magnitude and slip between the wheel and simulated vehicle speed is below a predetermined magnitude. The predetermined magnitude of slip may generally be from l0% to 50%, typically 30%.

The control system may also include a low speed disable means, which will make the antilock system inoperable at low wheel speeds, for example up to 3 to 4 miles per hour.

The control system may be powered via the ignition switch of the vehicle. However, power to the solenoid valves is preferably controlled through a switch actuated by movement of the brake pedal, for example the brake light switch of the vehicle, so that an antilock cycle cannot be initiated until the brakes have been applied.

An embodiment of the invention is now described, by way of example only, with reference to the accompanying drawings, in which:-

Figure l illustrates diagramatically an antilock braking system formed in accordance with the present invention;

Figure 2 is a cross section through a servo means and valve means for use in the vehicle antilock braking system illustrated in figure l;

Figure 3 is a cross section along the line III-III in figure 2;

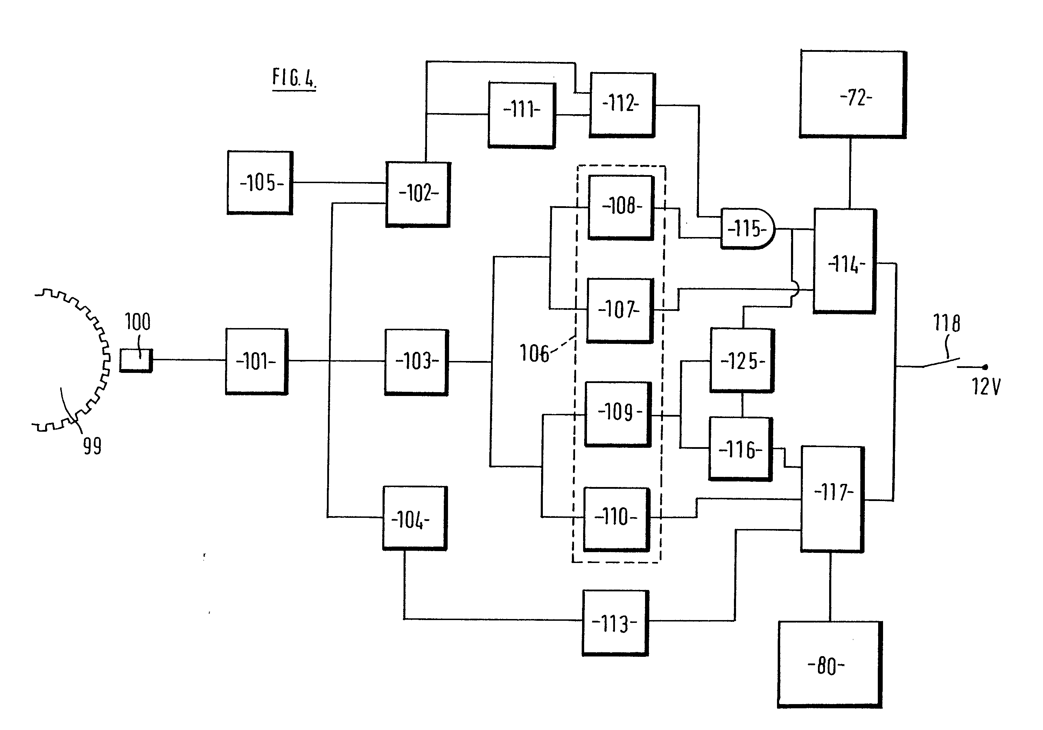

Figure 4 is a block diagram of the control system used in the antilock system illustrated in figure l; and

Figure 5 is a graph showing plots of wheel speed (C); wheel deceleration (D) and brake pressure (E) against time illustrating (in full line) a normal antilock braking cycle and (in broken line) an antilock cycle for a surface of low frictional coefficient where wheel acceleration does not rise sufficiently to trigger fast reapplication of the braking effort.

In the antilock braking system illustrated in figure l, the front wheels of a vehicle are provided with disc brakes l,l' controlled by actuating calipers 2,2' respectively and rear wheels are provided with drum brakes 3,3' being controlled by hydraulic cylinders 4,4' respectively.

The braking system is a dual system controlled by a servo assisted dual master cylinder 5 of conventional design. The master cylinder 5 has two outlets 6,6' which provide a source of hydraulic pressure for two legs of the dual system, one leg serving caliper 2 of the offside front wheel and cylinder 4 of the nearside rear wheel and the other leg serving caliper 2' of the nearside front wheel and cylinder 4' of the offside rear wheel.

The two legs of the system are identical in arrangement and operation and only one leg is described in detail below. Similar components have been identified with similar references.

The outlet 6 of master cylinder 5 is connected to the hydraulic fluid inlet port l3 of an antilock servo mechanism 50 and the outlet port l5 from said servo mechanism 50 is connected via line 7 to the nearside front caliper 2 and offside rear cylinder 4.

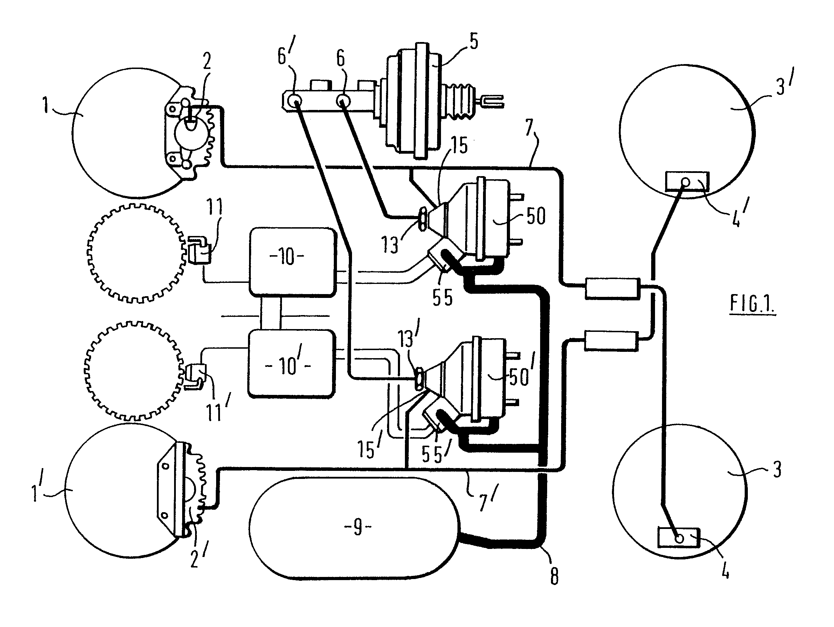

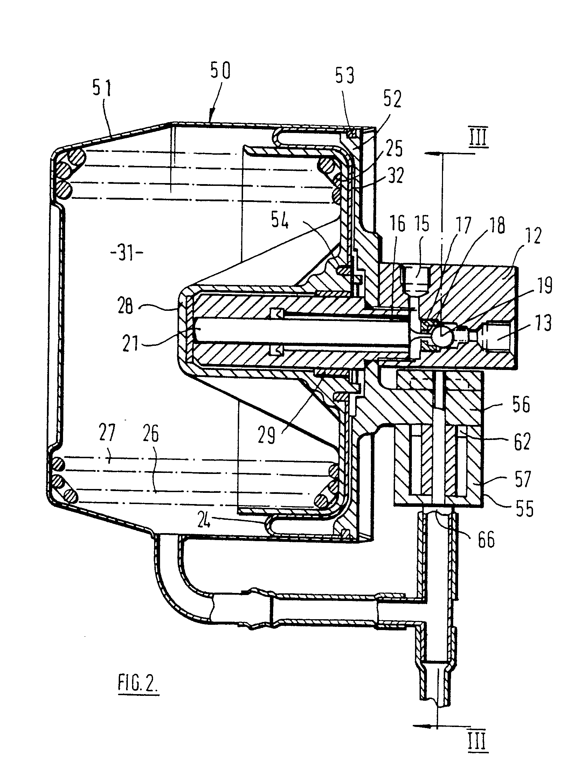

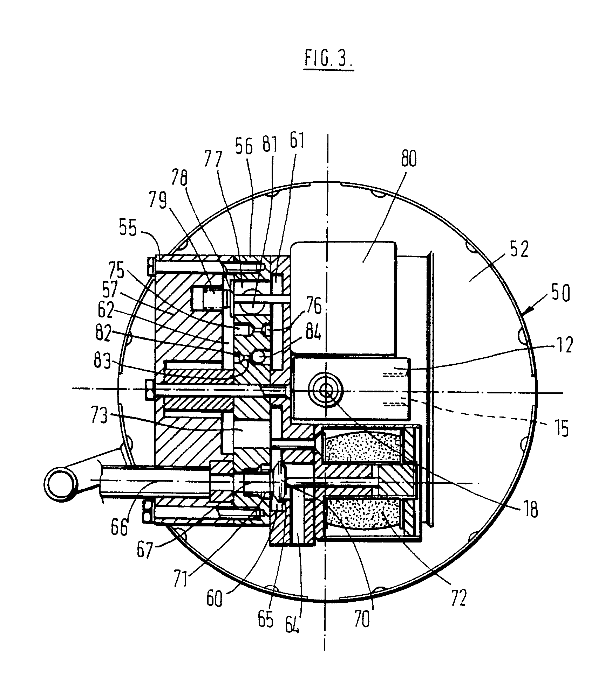

As illustrated in greater detail in figures 2 and 3, the servo mechanism 50 comprises a cylinder body 12 having an inlet port 13 and an outlet port 15 opening into a bore 16. A valve seat member 17 is secured in the bore 16 and has a control port 18 which can be closed by ball 19. A control plunger 21 is slidable in the bore 16 and in the position shown in figure 2 is operative to unseat the ball 19 against a light compression spring and open communication between the inlet port 13 and outlet port 15.

The cylinder body 12 is mounted through a closure member 52 of a dish shaped casing 51, so that it projects coaxially into the casing 51. A piston 25 and dished plunger 28 of integral moulded plastic construction are slidingly mounted on the cylinder body 12 so that the plunger 28 engages the end of control plunger 21. A pair of helical compression springs 26 and 27 act between the end wall of the casing 51 and the piston 25 to urge the piston 25 towards the closure member 52. An elastomeric diaphragm 24 is secured at its outer periphery between the closure member 52 and casing 51 in a circular groove 53, and at its inner periphery to the piston 25 in groove 54, thereby separating the casing 51 into two separate chambers 31 and 32.

A valve 55 has valve block 56 formed integrally of the closure member 52. A valve housing 57 is clamped about the valve block 56 to define a pair of chambers 60 and 61 on one side of the valve block 56 and a third chamber 62 on the other side of the valve block 56. The housing also defines a first port 64 which opens into chamber 60 via valve seat formation 65 and a second port 66 which opens into chamber 60 via a bore 67 through the valve block 56, the bore 67 being coaxial with the valve seat formation 65. A valve member 70 is provided between the valve seat formation 65 and bore 67. A spring 71 urges the valve member 70 into engagement with the seat formation 65 to close port 64. A solenoid 72 (solenoid A) is arranged to move the valve member 70 against the spring 71 away from seat formation 65 and into engagement with valve block 56, thereby opening port 64 and closing bore 67.

Chamber 60 is connected to the chamber 62 by means of bore 73 through the valve block 56. A bore 75 with restricter orifice 76 is provided through valve block 56 to connect chamber 62 with chamber 61. A second bore 77 of very much larger diameter is provided in parallel with bore 75 between chambers 62 and 61. The end of bore 77 adjacent chamber 62 is closed by valve member 78 which is urged into engagement with the valve block 56 by a spring 79. A second solenoid 80 (solenoid B) is arranged to move valve member 78 against the spring 79, thereby opening bore 77 to chamber 62. A transverse bore 81 through the valve block 56 connects bore 77 with chamber 32 of servo mechanism 50.

A third bore 82 with restricter orifice 83 is also provided between chambers 62 and 61. The third bore 82 is provided with a non return valve 84 which seats towards the chamber 62.

Chamber 31 of the servo mechanism 50 and port 66 of the valve 55 are connected via vacuum line 8 to a vacuum reservoir 9 and port 64 of the valve is open to atmosphere.

Solenoids A and B of the valve 55 are controlled by an electric control system 10 which processes signals from a variable reluctance output voltage sensing device 11, associated with the front wheel of the vehicle.

The pickup 100 of the variable reluctance output voltage sensing device 11 produces an output which typically ranges from 40mV at 3 mph to 1500mV at 100 mph. The frequency of the signal, which is proportional to the number of teeth of the toothed wheel 99, is typically set at 17.6Hz per mph. This signal is fed to a pickup amplifier 101, where it is converted to a 10V peak to peak square wave.

The square wave from amplifier 101 is fed to; means 102 for producing an analogue output signal, the voltage of which is proportional to the wheel velocity; means 103 for producing an analogue output signal, the voltage of which is proportional to wheel acceleration or deceleration; and means 104 for producing an analogue output signal, the voltage of which is proportional to the rate of change of acceleration, i.e. da/dt.

The analogue signal of wheel speed from means 102, is fed to a low speed disable circuit 105 which, if the wheel speed is below 3 to 4 mph, will prevent the antilock control system 10 from operating to energise solenoids A or B.

The analogue signal corresponding to wheel speed from means 102, is also fed to a wheel logic circuit 111 which produces a signal simulating vehicle speed, this signal being based upon the wheel speed signal when an antilock cycle is commenced and assuming an average deceleration of 1g. This simulated vehicle speed signal is fed to comparator means 112 where it is compared with the actual wheel speed signal from 102 and produces an output signal when the difference (ie slip) is below a predetermined value, for example 30%.

The analogue signal proportional to wheel acceleration or deceleration produced by means 103, is fed to an acceleration logic circuit 106 where; threshold switching means 107 produces an output signal when deceleration of the front wheel reaches a first predetermined magnitude, for example 1.5g;

threshold switching means 108 produces an output signal when deceleration of the front wheel falls to a second predetermined magnitude, for example 0.4g; theshold switching means 109 produces an output signal when the acceleration of the front wheel reaches a first predetermined magnitude, for example 4g; and threshold switching means 110 produces an output signal when the deceleration of the front wheel reaches a third predetermined magnitude, for example 2.5g.

The analogue signal proportional to rate of change of acceleration produced by means 104, is fed to a threshold switching means 113, which produces an output signal when deceleration starts to fall, i.e. da/dt is approximately zero.

The output of switching means 107 is connected to an input of switching circuit 114, by means of which a signal on the output of the switching means 107 may switch circuit 114 to energise solenoid A. The outputs of switching means 108 and comparator 112 are connected via an AND-gate 115, to a second input of switching circuit 114, so that simultaneous signals on the outputs of switching means 108 and comparator 112 may switch the circuit 114 to de-energise solenoid A. The output signal from AND-gate 115 is also arranged to switch on a timer 125.

The output of switching means 109 is connected through timer 116 to a first input of switching circuit 117, so that a signal on the output of switching means 109 may switch circuit 117 to energise solenoid B for a predetermined period set by the timer 116, for example 20 milliseconds. The output signal from switching means 109 is also arranged to switch off and reset timer 125. The output of the switching means 110 is connected to a second input of switching circuit 117, so that a signal on switching means 110 may switch circuit 117 to de-energise solenoid B. The output of switching means 113 is connected to a third input on the switching circuit 117, so that a signal on the output of switching means 113 may switch circuit 117 to de-energise solenoid B.

The timer 125 is connected through timer 116 to the switching circuit 117, so that if a predetermined time period elapses, for example 600 milliseconds, after generation of a signal at the output of the AND-gate 115 and a signal has not been generated at the output of switching means 109, circuit 117 will be switched to energise solenoid B for a predetermined period set by timer 116, for example 20 milliseconds.

Solenoids A and B are connected through switching circuits 114 and 117 respectively to the vehicle power supply by a brake light switch 118. The control circuit is powered by a 10 volt stabilised supply (not shown) which is connected to the vehicle supply via the ignition switch.

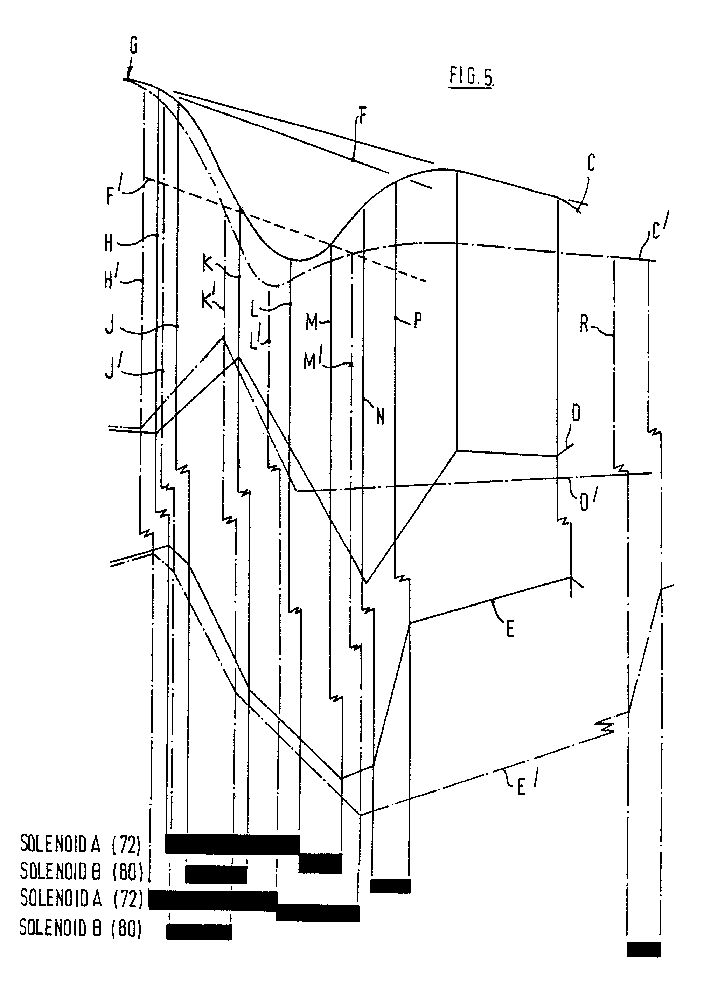

A typical antilock braking cycle is illustrated (in full line) in figure 5, where curve C represents wheel speed, curve D represents wheel deceleration, curve E represents brake pressure, line F represents simulated vehicle speed obtained from speed logic circuit 111 and line F' represents the wheel speed corresponding to the simulated vehicle speed with 30% slip. The shift in time between wheel speed and deceleration curves and the brake pressure curve is due to delays in the solenoid valve operation and electronics.

Upon application of the brakes, at point G the solenoid switching circuits 114 and 117 are connected through brake light switch 118 to the vehicle power supply. However, both solenoids A and B remain de-energised and both chambers 31 and 32 of servo means 50 are connected to vacuum, so that the master cylinder 5 will be connected to the caliper 2 and wheel cylinder 4 and the braking effort will depend on the force applied to the brake pedal by the operator.

When deceleration of the wheel reaches 1.5g at time H, an output signal is produced by threshold switching means 107 and this switches circuit 114 to energise solenoid A. As a result, valve member 70 closes bore 67 and opens seat 65, so that chamber 32 is connected to atmosphere through restricted bores 75 and 82. Air will thus be allowed into chamber 32 at a relatively slow rate. The inbalance in pressure across the diaphragm 24 will oppose the load applied by springs 26 and 27 and force piston 25 away from the closure member 52. Movement of the piston 25 will be transmitted to plunger 21, so that the ball 19 will close seat 18, isolating the caliper 2 and cylinder 4 from the master cylinder 5. Further movement of the plunger 21 will permit the brake fluid in caliper 2 and cylinder 4 to expand back into bore 16, thus reducing the braking effort.

When decleration of the wheel reaches 2.5g at time J, an output signal is produced by threshold switching means 110 and this switches circuit 117 to energise solenoid B. As a result, valve member 78 is opened so that air can enter chamber 32 at a fast rate through the relatively large bore 77, with a corresponding increase in the rate of reduction of braking effort.

When the deceleration of the wheel begins to fall, i.e. da/dt is approximately zero at time K, an output signal is produced by threshold switching means 113 and this switches circuit 117 so that solenoid B is de-energised. As a result, valve member 78 closes bore 77 and the servo means 50 reverts to a slow rate of reduction of braking effort.

When the deceleration of the wheel falls to 0.4g at time L, an output signal is produced by a threshold switching means 108. However, as slip at this point is above 30%, no signal will appear at the output of comparator 112. It is not until time M when slip falls below 30% that an output signal will be produced at comparator 112 and thus circuit 114 will be switched via AND-gate 115 to de-energise solenoid A. As a result, valve member 70 closes seat 65 and opens bore 67 thus connecting chamber 32 to vacuum via restricted bore 75 and reapplying braking effort at a relatively slow rate.

When wheel acceleration reaches 4g at time N, an output signal is produced at threshold switching means 109 which switches on timer 116. This in turn switches circuit 117 to energise solenoid B and open bore 77 to give a fast rate of reapplication of the brake. At the end of 20 milliseconds, time P, timer 116 switches circuit 117 to de-energise solenoid B, so that the servo means 50 reverts to a slow rate of reapply. This slow rate of reapply continues until full braking effort is re-established or another antilock cycle begins.

When braking on a surface of low frictional coefficient wheel deceleration will be quicker and wheel acceleration slower than for a surface of high frictional coefficient and it is possible that acceleration of the wheel may not be sufficient to reach the level, that is 4g, at which fast reapplication of braking effort is triggered, as illustrated in broken line in figure 5. Under such conditions the first part of the antilock cycle will follow the same stages as the normal antilock cycle described above. However, the cycle will remain at slow reapply until time R when 600 milliseconds have elapsed from time M when solenoid A was switched to begin slow reapply. At time R, timer 125 will energise solenoid B, through timer 116, so that the servo means will go from slow reapply to fast reapply. Fast reapply will continue for the 20 milliseconds set by timer 116 after which solenoid B will be de-energised and the servo means will revert to slow reapply, or if during the fast reapply stage the wheel begins to decelerate and deceleration reaches 1.5g, solenoid A will be energised by switching means 107 and the servo means will go to fast reduction of braking effort for the remainder of the 20 milliseconds. The antilock cycle will then revert to its normal sequence.

Figure 5 represents a full antilock braking cycle. One or more of the stages described may be omitted, if conditions require. For example, if slow reduction of braking effort is sufficient to prevent the wheel decelerating at above the third predetermined magnitude, for example 2.5g, the fast reduction stage will be omitted and the cycle will next go to the slow reapplication stage.

Various modifications may be made without departing from the invention. For example, while in the above embodiment, the servo means may reduce braking effort at a fast or slow rate or reapply braking effort at a fast or slow rate and the slow rate of reapply is slower than the slow rate of reduction, the invention is applicable to any system which provides for at least one rate of reduction and at least two rates of reapply. Furthermore, although described with reference to a dual braking system split diagonally, the invention is applicable to single or multi-circuit braking systems.

In the above description, unless stated otherwise, the various circuit elements will produce a digital output signal. This may be produced by switching from a low state to a high state or from a high state to a low state. Alternatively each circuit element could produce a coded signal and switching circuits 114 and 117 could be replaced by a processor which would control solenoids 72 and 80 in accordance with the coded signal received.

## Claims

1. A control system for an antilock braking system including servo means (50; 50′) for varying the effort applied to a brake on a wheel, a first solenoid valve (70) by means of which said servo means (50; 50′) may be controlled to either reduce or reapply the braking effort and a second solenoid valve (78) by means of which said servo means (50; 50′) may be controlled to reapply the braking effort at either a fast or slow rate, said control system characterised in that; sensing means (11; 11′) is associated with the wheel for producing a signal corresponding to the speed of the wheel; means (103) is provided for converting the wheel speed signal into a signal corresponding to wheel acceleration or deceleration; means (107, 114, 72) is provided for switching said first solenoid valve (70), so that the servo means (50; 50′) will act to reduce the braking effort applied to the wheel, when the wheel deceleration reaches a first predetermined magnitude; means (108, 115, 114, 72) is provided for switching said first solenoid valve (70), so that the servo means (50; 50′) will act to reapply the braking effort, when the wheel deceleration falls to a second predetermined magnitude; means (109, 116, 117, 80) is provided for switching said second solenoid valve (78), so that the servo means (50; 50′) will go from a slow rate of reapply to a fast rate of reapply, when the wheel acceleration reaches a first predetermined magnitude; means (116, 117, 80) is provided for switching said second solenoid valve (78), so that the servo means (50; 50′) will go from a fast rate of reapply to a slow rate of reapply, when braking effort has risen significantly; and

means (125, 116, 117, 86) is provided for switching said second solenoid valve (78), so that the servo means (50; 50') will go from a slow rate of reapply to a fast rate of reapply after a predetermined time period has elapsed from when the first solenoid valve (70) was switched to reapply braking effort, if the second solenoid valve (78) has not otherwise been so switched.

2. A control system according to Claim 1 characterised in that the first predetermined magnitude of deceleration is between 1g and 6g; the second predetermined magnitude of deceleration is at a point just before the wheel starts to accelerate; the first predetermined magnitude of acceleration is between 1g and 8g; and the predetermined time period is between 300 and 900 milliseconds.

3. A control system according to Claim 2 in which the predetermined time period is of the order of 600 milliseconds.

4. A control system according to Claim 1, 2 or 3 characterised in that said second solenoid valve (78) may be controlled so that reduction in braking effort may be at a fast or slow rate, means (110) being provided by which the second solenoid valve (78) may be switched, so that the servo means (50; 50') will go from a slow rate of reduction of braking effort to a fast rate of reduction of braking effort, when wheel deceleration reaches a third predetermined magnitude, said third predetermined magnitude being in excess of the first predetermined magnitude of deceleration.

5. A control system according to Claim 4 characterised in that said third predetermined magnitude of deceleration is between 1g and 6g.

6. A control system according to Claim 4 or 5 characterised in that means (104) is provided for converting the wheel speed signal into a rate of change of deceleration or acceleration signal, and means (113) for switching said second solenoid (78), so that the servo means (50; 50') will go from a fast to a slow rate of reduction of braking effort, when the rate of deceleration is approximately zero.

7. A control system according to any one of the preceding claims characterised in that means (111) is provided for producing a simulated vehicle speed signal; means (102, 112) is provided for comparing this simulated vehicle speed signal with the actual wheel speed signal and producing a output when slip is less than a predetermined magnitude; and means (115, 114, 72) is provided for switching the first solenoid valve (70), so that the servo means (50; 50') will act to reapply the braking effort, only when the wheel deceleration falls to said second predetermined magnitude and slip between the wheel and simulated vehicle speed is below said predetermined magnitude.

8. A control system according to Claim 7 characterised in that the predetermined magnitude of slip is from 10% to 50%.

9. A control system according to Claim 7 or 8 characterised in that the means (111) for producing a simulated vehicle speed signal, processes the wheel speed signal occurring when an antilock cycle is commenced.

10. A control system according to any one of the preceding claims characterised in that said means for switching the second solenoid valve (78) when braking effort has risen significantly is triggered in response to wheel acceleration falling to a second predetermined magnitude, said second predetermined magnitude being less than the first predetermined magnitude.

11. A control system according to Claim 10 characterised in that said second predetermined magnitude is from 1g to 3g.

12. A control system according to any one of Claims 1 to 9 characterised in that said means for switching the second solenoid valve (78) when braking effort has risen significantly is triggered after a second predetermined time period has elapsed from a preceding event in the antilock cycle.

13. A control system according to Claim 12 in which said second predetermined time period is from 15 to 60 milliseconds after the servo means (50; 50') is switched to go from slow reapply to fast reapply.

14. A control system according to Claim 12 characterised in that said second predetermined time period is from 75 to 140 milliseconds after the rate of change of deceleration of the vehicle wheel was approximately zero.

15. A control system according to any one of the preceding claims characterised in that means (105) is provided to disable the antilock system at wheel speeds below a predetermined magnitude.

16. A control system according to any one of the preceding claims characterised in that means (118) is provided to permit energisation of the solenoid valves only after a braking operation has been commenced.

FIG.1.

FIG. 2.

FIG. 3.

FIG. 4.

0 256 665

FIG. 5.

SOLENOID A (72)
SOLENOID B (80)
SOLENOID A (72)
SOLENOID B (80)